# FASCICULE DE BREVET EUROPEEN

(11) **EP 1 473 494 B1**
(45) Date de publication et mention de la délivrance du brevet: **27.12.2006**
(21) Numéro de dépôt: 04356060.6
(22) Date de dépôt: 30.04.2004
(51) Int. Cl.: F16K 17/36

(54) **Dispositif de sécurité automatique**
Automatiksicherheitsvorrichtung
Automatic safety device

(30) Priorité: 02.05.2003 FR 0305398
(43) Date de publication de la demande: 03.11.2004
(73) Titulaire: Guillemaut, Henri, 74380 Cranves Sales (FR)
(72) Inventeur: Guillemaut, Henri, 74380 Cranves Sales (FR)

(56) Documents cités:
- US-A- 406 290
- US-A- 3 745 277
- US-A- 4 131 124
- US-A- 4 191 868
- US-A- 4 513 763
- US-A- 4 799 505
- PATENT ABSTRACTS OF JAPAN vol. 0100, no. 62 (M-460), 12 mars 1986 (1986-03-12) & JP 60 208675 A (KAZUO HASHIMOTO; others: 01), 21 octobre 1985 (1985-10-21)

## Description

La présente invention a pour objet un dispositif de sécurité permettant d'interrompre la distribution d'un circuit de gaz, de fluide, d'électricité, en cas de choc ou de séisme.

Elle concerne d'une manière générale le domaine industriel et commercial des équipements d'installations de gaz, de fluides inflammables, d'électricité, de vapeur et produits chimiques en zones sismiques et dans le domaine industriel et commercial des équipements de véhicules routiers et ferroviaires, voire sur des bateaux.
- Lors de séismes :
   On peut observer de graves incendies, qui sont provoqués par :
      - Des ruptures de conduites de gaz domestique .
      - Des courts-circuits de canalisations électriques détériorées .
- Lors de chocs violents de véhicules routiers accidentés :
   - Dans l'espace autour du moteur, il y a présence de tuyauteries de carburant.
   - Il y a présence de câbles électriques reliés directement à la batterie d'accumulateurs .
   - Il peut y avoir rupture de canalisations de carburant.
   - Il peut y avoir détériorations de câbles électriques causées par des pièces métalliques tranchantes et coupantes (tôles déchirées) provoquant des courts-circuits .
   - Le court-circuit allume les vapeurs de carburant et l'incendie est déclenché .
- La présente invention a pour objet de limiter, voire d'empêcher ces départs d'incendie

Le document US-A-4,513,763 décrit un dispositif de sécurité automatique à inertie tel que présenté dans le préambule de la revendication 1.

### DESCRIPTION

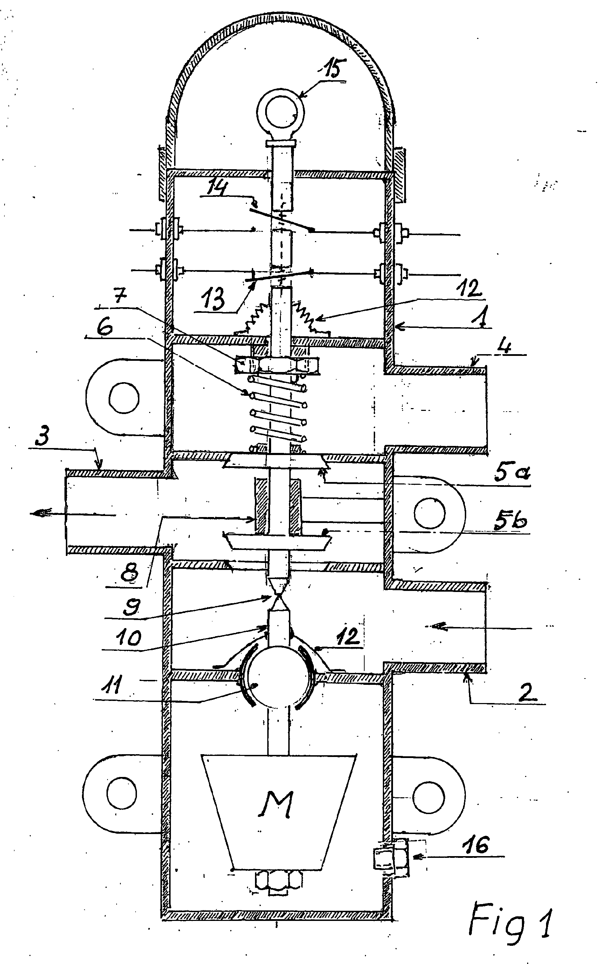

Le dispositif selon la présente invention est un système de sécurité automatique à inertie, qui permet d'interrompre la distribution d'un circuit de gaz domestique ou industriel, de fluide inflammable, d'électricité, d'eau, de vapeur de produits chimiques ou autres.
- Il est constitué par exemple, pour une application "distribution de gaz domestique", Fig 1 de :
   - Un boitier (1) fixé verticalement sur un support rigide (mur).
   - Une arrivée de gaz (2)
   - Un départ de gaz (3)
   - Une mise à atmosphère haute (4)
   - Un jeu de clapets (5a - 5b) appuyé par un ressort (6) réglé par écrou (7) et guidé par un support (8)
- Position normale :
   - Le clapet (5a) est fermé ; le clapet (5b) est ouvert, il permet le passage du gaz.
   - Le jeu de clapets est tenu en position normale par appui de faible section (9) sur un "balancier pendule" (10) articulé par rotule (11), avec une masse. M et un joint souple et étanche (12), à la partie inférieure ; la partie supérieure du dispositif comporte une tige isolée solidaire des clapets ; cette tige munie d'un joint étanche et souple (12) commande des contacts électriques (13-14) .
   - Un anneau (15) à la partie haute permet un réarmement éventuel après fonctionnement.
   - Un bouchon (16) permet d'effectuer un essai de fonctionnement en poussant le pendule, et ce après avoir pris toutes les mesures de sécurité.

### FONCTIONNEMENT

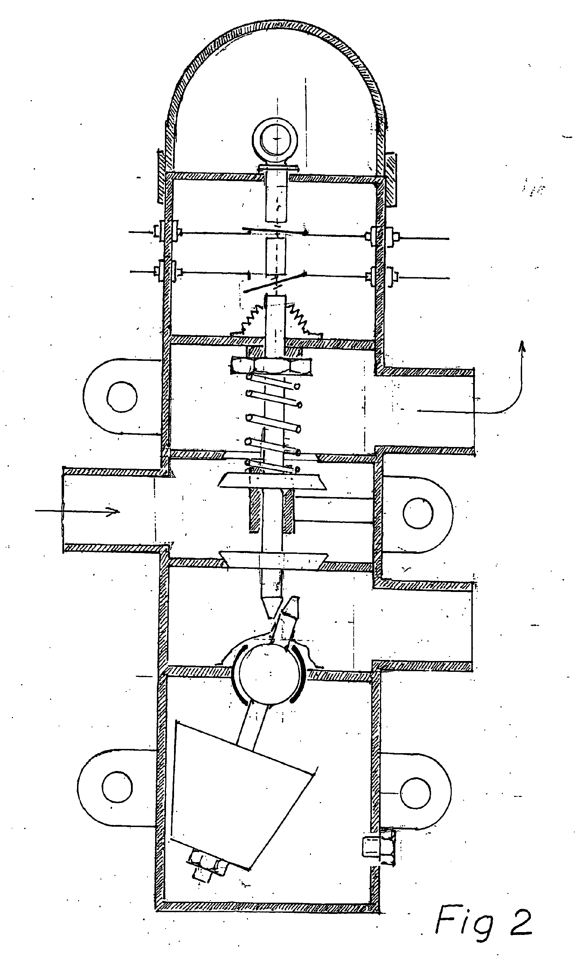

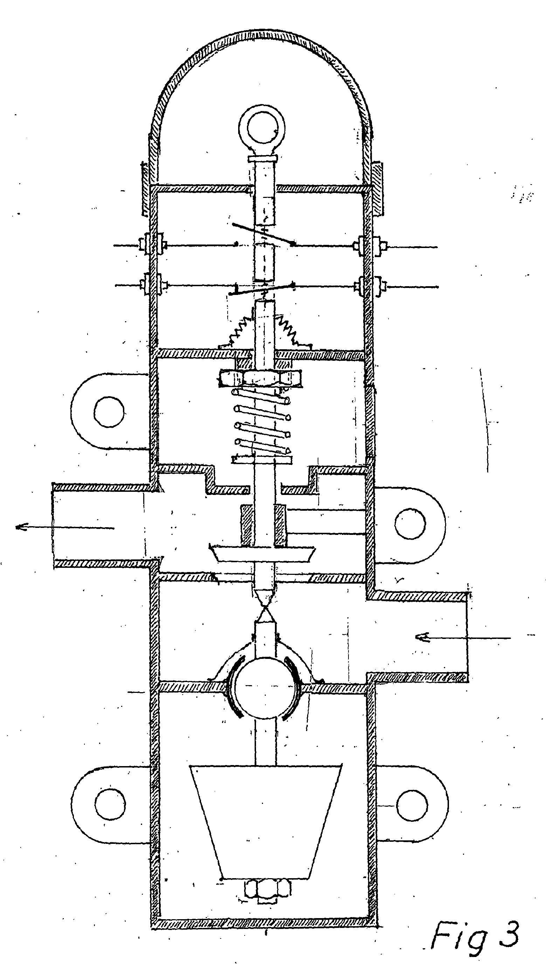

En cas de secousse sismique ou de choc violent ;
- La masse .M. par inertie ne suit pas le déplacement de l'ensemble.
- Le pendule oscille et l'appui du jeu de clapets est rompu Fig 2
- Le ressort provoque la fermeture du clapet .5b.. l'ouverture du clapet 5a.
- Le circuit est interrompu de .2. vers .3.
- La partie .3. est reliée à l'atmosphère 4.
- Les contacts électriques 13, 14 fonctionnent et permettent :
   - Une coupure générale de courant électrique
   - Une alimentation éventuelle de dispositifs de secours
      (Les contacts électriques à commande mécanique, peu - vent être remplacés par des contacts à liquide contenu dans une ampoule à mercure) .
- Pour une application véhicules routiers, ferroviaires ou autres, la mise à l'atmosphére est supprimée Fig. 3.
- Le système peut avoir également une application sur des bateaux .

## Revendications

1. Dispositif de sécurité automatique à inertie, permettant d'interrompre la distribution d'un circuit de gaz domestique, de fluide inflammable, d'électricité, de vapeur de produit chimique ou autres en cas de secousses sismiques ou de chocs violents, comprenant un boîtier (1) fixe comportant une arrivée de gaz (2), un départ (3), de préférence une mise à l'atmosphère (4), un jeu de clapets (5 a - 5 b) appuyé par un ressort (6) sur l'extrémité d'un balancier pendule (10) qui oscille en cas de secousse et libère le jeu de clapets poussé par le ressort (6), un clapet (5 b) se fermant et interrompant l'arrivée de gaz (2) et l'autre clapet (5 a) s'ouvrant et si une mise à l'atmosphère a été prévue, pouvant mettre en communication le départ (3) avec l'atmosphère, les clapets (5 a - 5 b) étant solidaires d'une tige isolée, **caractérisé en ce que** la tige isolée commande des contacts électriques (13 - 14) permettant une coupure générale de courant électrique quand le jeu de clapets est libéré.

2. Utilisation du dispositif selon la revendication 1 **caractérisé par le fait que** le dispositif peut être adapté aux véhicules routiers et ferroviaires en interrompant le courant de batterie d'accumulateurs et en fermant les circuits de combustibles.

3. Utilisation du dispositif selon la revendication 1 **caractérisé par le fait qu'**il peut éviter des incendies en cas de séismes, ou de véhicules routiers et ferroviaires en cas de chocs violents.

4. Utilisation du dispositif selon la revendication 1 **caractérisé en ce qu'**il concerne le domaine industriel et commercial des équipements d'installations de réseaux de gaz, de fluide inflammable, d'électricité, de vapeurs et produits chimiques.

5. Utilisation du dispositif selon la revendication 1 **caractérisé en ce qu'**il concerne le domaine industriel et commercial des équipements de véhicules routiers et ferroviaires, voire de bateaux.

## Claims

1. - Automatic device safety with inertia making it possible to stop the distribution of a circuit of gas, fluid, electricity in the event of shock or seism, including a case (1) preferably fixes with a gas arrival (2), a departure (3), a venting (4), a set of valves (5a-5b) supported by a spring (6) on the end of a beam (10) which oscillates in the event of jolt and releases the valves pushed by the spring (6), the valve 5b closes and stops the gas arrival (2) while the valve (5a) opens ; if a venting communicating with the departure (3) were envisaged, the valves (5a-5b) are interdependent of an insulated stem which actuates electrical contacts (13-14), thus allowing a general cut of the electrical current when the valves are released.

2. - Use of the device according to claim 1 which can be adapted to the road and railway vehicles by stopping the electric flux of the accumulator battery, and by closing the arrival of fuel.

3. - Use of the device according to claim 1 which can avoid fires in the event of earthquake, or of shocks violent one between road or railway vehicles.

4. - Use of the device according to claim 1 in the sectors industrialist and commercial of the equipment of networks of gas, flammable fluid, electricity, stream and chemicals.

5. - Use of the device according to claim 1 in the sectors industrialist and commercial of the equipment of road and railway, and naval vehicles.

## Patentansprüche

1. - Automatsicherheit mit der Schwungkraft, die es möglich, die Verteilung eines Stromkreises des Gases, der Flüssigkeit, der Elektrizität im Falle des Schlages oder des Erdbebens, einschließlich Verlegenheiten des Falles (1) mit einer Gasankunft (2), eine Abfahrt (3), ein Venting (4), ein Satz vorzugsweise zu stoppen Ventile (5a-5b) macht gestützt bis zum einem Frühling (6) am Ende eines Lichtstrahls (10), der im Falle des Rucks oszilliert und die Ventile freigibt, die bis zum dem Frühling (6) gedrückt werden, das Ventil 5b schließt und stoppt die Gasankunft (2), während das Ventil (5a) sich öffnet; wenn ein Venting, der die Abfahrt (3) ist, beabsichtigt wurden, sind die Ventile (5a-5b) von einem Isolierstamm, der elektrische Kontakte (13-14) betätigt voneinander abhängig und so erlauben einen allgemeinen Schnitt des elektrischen Stromes, wenn die Ventile freigegeben werden.

2. - Gebrauch von der Vorrichtung entsprechend Anspruch 1, der den Straße und Gleisträgern angepaßt werden kann, indem man den elektrischen Fluß der Akkumulatorbatterie stoppt und durch das Schließen der Ankunft des Kraftstoffs.

3. - Gebrauch der Vorrichtung entsprechend Anspruch 1, der Feuer im Falle des Erdbebens vermeiden kann oder von Schlägen heftiges zwischen Straße oder Gleisträgem.

4. - Gebrauch von der Vorrichtung entsprechend Anspruch 1 in den Sektoren Industrieller und Werbung der Ausrüstung der Netze des Gases, der feuergefährlichen Flüssigkeit, der Elektrizität, des Stromes und der Chemikalien.

5. - Gebrauch von der Vorrichtung entsprechend Anspruch 1 in den Sektoren Industrieller und Werbung der Ausrüstung der Straße und des Gleiss und Marineträger.
